# EUROPEAN PATENT SPECIFICATION

(11) **EP 4 088 979 B1**
(45) Date of publication and mention of the grant of the patent: **27.11.2024**
(21) Application number: 22172407.3
(22) Date of filing: 09.05.2022
(51) Int. Cl.: B60T 7/10, B60T 13/22, B60T 17/22, G05G 1/04

(54) **AN ACTUATING ASSEMBLY FOR A HYDRAULIC BRAKE**
BETÄTIGUNGSANORDNUNG FÜR EINE HYDRAULISCHE BREMSE
ENSEMBLE D'ACTIONNEMENT POUR FREIN HYDRAULIQUE

(30) Priority: 11.05.2021 IT 202100012056
(43) Date of publication of application: 16.11.2022
(73) Proprietor: CNH Industrial Italia S.p.A., 10156 Torino (IT)
(72) Inventor: Conti, Enrico, 25123 Brescia (IT)
(74) Representative: CNH Industrial IP Department

(56) References cited:
- EP-A1- 3 365 208
- DE-A1- 102009 005 009
- US-A1- 2020 122 703
- US-B2- 10 710 566

## Description

### TECHNICAL FIELD

The invention concerns an assembly for actuating a hydraulic brake, in particular a spring applied hydraulic brake.

### BACKGROUND OF THE INVENTION

Hydraulic brakes are normally used for braking any kinds of vehicle.

Some heavy vehicles, specifically work vehicles such as tractors, combine, excavators, wheel loaders, and the like are provided with a hydraulic circuit and a parking brake being actuated by the hydraulic circuit and suitable for automatically engaging when no hydraulic power is supplied thereto.

The hydraulic circuit includes a pump, which is driven by a power source.

Typically, this kind of parking brake operates based on a friction member being spring biased against a fixed abutment element. The hydraulic circuit opposes the biasing of the friction member during the normal vehicle advancing to disengage the parking brake.

With the pump being inactive, the hydraulic pressure in the circuit should be relieved to obtain the biasing of the friction member and so the engagement of the parking brake.

The type of parking brake described above is known in the art as a spring activated hydraulic release or SAHR brake.

Vehicles that mount SAHR type brakes are usually equipped with an actuating assembly including at least two independent control mechanism that are placed in different locations and both manually operable by a driver.

Examples are shown in EP3365208A1, US10710566B2, US2020/122703A1, DE102009005009A1.

One of the control mechanisms is operable to control the brake proportionally and in an indirect manner through an electronic control unit. The other control mechanism is purely mechanic and serves to engage fully the brake by carrying out a pressure relief in the hydraulic circuit.

The latter control mechanism is useful when the availability of electric power is suddenly interrupted and the residual pressure in the circuit is sufficient for maintaining the brake disengaged.

In general, the need is felt to improve the control of SAHR type brakes, in particular by facilitating the operations of the driver.

Furthermore, the need is also felt to increase the compactness of the actuating assemblies for SAHR type brakes.

An aim of the invention is to satisfy at least one of the needs, preferably in a simple and cost saving fashion.

### SUMMARY OF THE INVENTION

The aim above is reached by an actuating assembly for a hydraulic brake as claimed in the appended set of claims.

Dependent claims disclose particular embodiments of the invention.

### BRIEF DESCRIPTION OF DRAWINGS

For a better understanding of the invention, a preferred embodiment is described in the following, by way of a nonlimiting example, with reference to the attached drawings wherein:
- Figure 1 is a schematic representation of a brake arrangement controllable through an actuating assembly according to the invention;
- Figure 2 is a perspective view of an embodiment of the actuating assembly;

- Figures 3, 4, 5 are lateral views of the actuating assembly of Figure 2 in respective different configurations;
- Figures 6 and 7 are lateral views of the actuating assembly of Figure 2 in the configuration of Figure 3, with parts removed for clarity and according to distinct conditions of an interlocking device of the assembly; and
- Figure 8 shows a detail of Figure 2, according to a different perspective point of view.

### DETAILED DESCRIPTION OF THE INVENTION

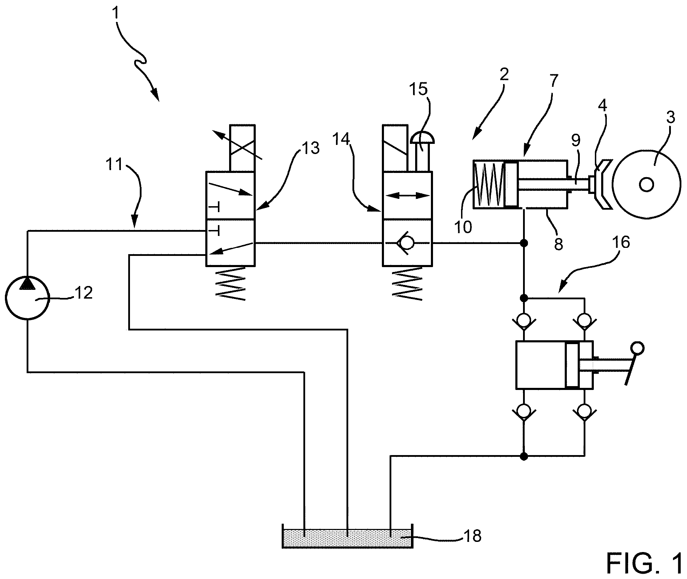

In Figure 1, reference number 1 indicates, as a whole, a vehicle, in particular a work vehicle such as a tractor.

Vehicle 1 comprises an apparatus for braking comprising a hydraulic brake 2, in particular a spring applied hydraulically released or SAHR brake. Specifically, the brake 2 comprises a first brake element 3, in particular in the form of a brake disk, attached to an axle of vehicle 1, and a second brake element 4, in particular in the form of a brake pad, adapted to cooperate with the first brake element 3 to generate a braking force on the axle.

The apparatus further comprises an actuating assembly for actuating the hydraulic brake 2.

More in detail, the actuating assembly comprises a hydraulic actuator 7 configured to be supplied with pressurized liquid and to actuate the hydraulic brake 2 by means of the pressurized liquid.

In particular, the actuator 7 comprises a cylinder 8 to receive the pressurized liquid and a piston 9 carrying the second brake element 4 in a fixed position. Piston 9 is coupled to the cylinder 8 in an axially sliding manner inside the cylinder between a fully engaged brake position, in which the first and second brake element 3, 4 cooperate to generate the maximum braking force, and a fully disengaged brake position, in which the first and second brake element 3, 4 are separated. Piston 9 can take a plurality of intermediate engaged brake positions between the fully engaged and disengaged brake position, in which cooperation between the first and second brake element 3, 4 occurs with the generation of a reduced braking force than the maximum one. More precisely, the braking force decrease as the piston 9 moves toward the fully disengaged brake position.

The pressurized liquid is received in the cylinder 8 such that the pressure of the liquid drives the piston 9 toward the fully disengaged brake position.

The actuator 7 further comprises a spring 10 acting inside the cylinder 8 on the piston 9. The spring 10 opposes to the pressure, such that the piston 9 reaches the fully engaged brake position when the pressure is absent or when the force exerted by the pressure is less than that exerted by the spring 10.

Furthermore, the actuating assembly comprises a hydraulic circuit 11, for supplying the actuator 7 with pressurized liquid.

The circuit 11 comprises a source of the pressurized liquid for supplying the actuator 7, for example a powered pump 12. Moreover, the circuit 11 specifically comprises two control valves 13, 14 arranged in series and through which the pressurized liquid is supplied. The valve 13 is a proportional valve. The valve 14 has two positions: in a first position, the valve 14 behaves as a check valve, thereby allowing the actuator 7 to be supplied with the pressurized liquid processed by the source; in a second position, the valve 14 behaves as a venting or pressure relief valve, thereby allowing a relief of the pressure or a venting of the pressurized liquid supplied to the actuator 7, i.e. of the pressure in the cylinder 8.

This relief corresponds to the engagement of the brake 2, i.e. more precisely to the movement of the piston 9 toward the fully engaged brake position. On the other hand, supplying the pressurized liquid to the actuator 7 corresponds to the disengagement of the brake 2, i.e. more precisely to the movement of the piston 9 toward the fully engaged brake position. Therefore, the actuating assembly and the brake 2 make part of a SAHR brake arrangement.

Valves 13, 14 are electrically actuated. Hence, if no electric power is available, the supplying of the pressurized liquid and/or the pressure relief is not possible.

For this reason, the actuating assembly comprises an override element 15 that is manually operable by a driver of vehicle 1 to cause the pressure relief, in particular by overriding the position of the valve 14. Hence, the override element 15 makes part of a pressure relief device to relieve the pressure of the pressurized liquid supplied to the actuator 7.

Moreover, the actuating assembly comprises a pump device 16 that is manually operable by the driver for supplying the pressurized liquid to the actuator 7, namely a further source of pressurized liquid. For example, both the sources are coupled to a tank 18 or to respective tanks 18, to take the liquid therefrom. Each tank 18 can make part of the actuating assembly.

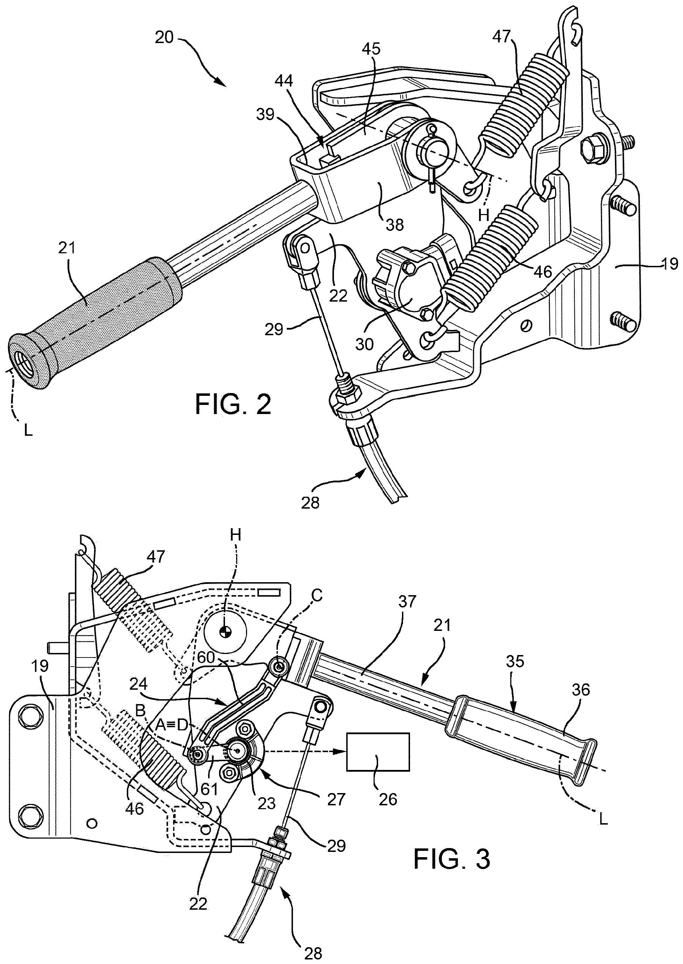

The actuating assembly further comprises a control mechanism 20, shown in Figure 2, which is manually operable by the driver for controlling the brake 2.

The mechanism 20 comprises a frame 19, specifically fixed to the vehicle 1. Moreover, the mechanism 20 comprises two levers 21, 22 being hinged to the frame about a same hinge axis H. The mechanism 20 also comprises a movable element or member 23 (Figure 3) carried by the lever 22 in a movable manner with respect to the lever 22 itself.

To couple the lever 21 to the element 23, the mechanism 20 comprises a transmission 24 configured to transmit power from the lever 21 to the element 23. More in detail, the transmission 24 is configured to confer a movement to the element 23 in response to a corresponding movement of the lever 21, more precisely in response to a relative rotation thereof with respect to the lever 22. The transmission 24 transmits power from the lever 21 to the element 23 only if the lever 21 moves relatively to the lever 22; otherwise, namely when lever 21 integrally rotates with lever 22, no power is transmitted and the element 23 remains stationary accordingly.

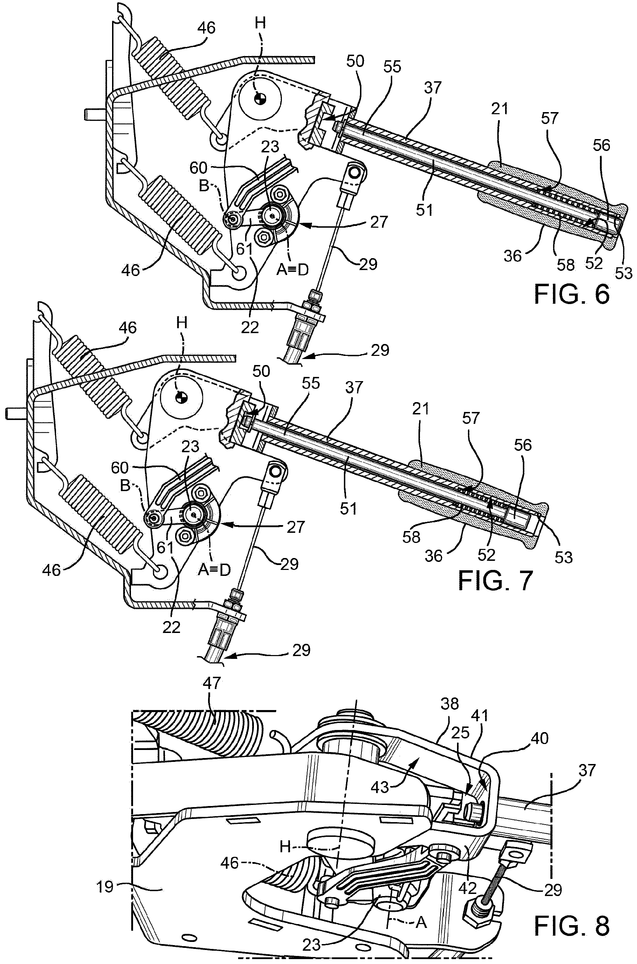

To constraint the lever 21 to rotate integrally with lever 22, the mechanism 20 comprises an interlocking device 25 (Figure 8) configured to lock the lever 21 to the lever 22. In other words, the interlocking device 25 is operable, in particular by the driver in a manual manner, more in particular to set the levers 21, 22 in a interlocked configuration, in which the levers 21, 22 are reciprocally constrained to rigidly move together, such that in particular the element 23 does not move with a rotation of the lever 21, and to release the levers 21, 22 in an unlocked configuration, in which the lever 21 can rotate relatively to the lever 22, thereby moving in particular the element 23 via the transmission 24.

For the control of the brake 2, in addition to the mechanism 20, the actuating assembly comprises a control unit 26, a transducer 27, and an actuating device 28.

The actuating device 28 is coupled to the lever 22 and configured to operate the brake 2 in response to a rotation of the lever 22; this rotation can be for example achieved by locking the lever 21 to the lever 22 through the interlocking device 25 and by rotating the lever 21. Thus, the actuating device 28 can be manually operated by the driver in the described manner. More in detail, the actuating device 28 comprises the actuator 7 and the aforementioned pressure relief device. The pressure relief device is configured to relieve the pressure of the pressurized liquid supplied to the actuator 7 in response to the rotation of the lever 22. Specifically, the actuating device 28 further comprises a mechanical member 29, such as a Bowden cable, which is coupled to the lever 22 so as to react to the rotation of the lever 22. The mechanical member 29 is coupled to the override element 15 and is configured to drive the override element 15 in response to the rotation of the lever 22. The override element 15 driven in this manner causes the pressure relief.

The transducer 27 is associated to the element 23 to detect the movement thereof, which is caused by the transmission 24. Transducer 27 is configured to generate a signal associated to the detected movement. The signal is indicative of the rotation of the lever 21 relatively to the lever 22. This relative rotation corresponds, indeed, to the actual movement of the element 23, which is specifically a rotation, but it may also be alternatively a translation according to not shown embodiments. For example, transducer 27 may be a potentiometer.

Preferably, the element 23 is carried by the lever 22 in a rotatable manner about an axis A, which is parallel to axis H. More in detail, the transducer 27 comprises an external casing 30 fastened to the lever 22, e.g. by means of fastening means such as bolts. The element 23 has at least a portion housed within the external casing 30, in particular where the means for detecting the movement are housed. In particular, the portion is a pin.

The element 23 may be supported about axis A by the lever 22 even indirectly via the casing 30; in other words, the element 23 may be supported by the casing 30 or the lever 22 directly by means of one or more bearings.

The control unit 26 is coupled to the transducer 27. Control unit 26 is configured to extract from the signal generated by the transducer 27 an item of information related to the relative rotation of the lever 21 or to the movement of the element 23. Control unit 26 is further configured to control the brake 2 as a function of the extracted item of information. More precisely, control unit 26 controls the brake 2 in a proportional manner based on the item of information. In other words, the engagement and disengagement of the brake 2 is controlled gradually according to the extent of the relative rotation of the lever 21 and the direction thereof. According to one direction, the brake 2 is engaged; according to the opposite direction, the brake 2 is disengaged. The higher is the relative rotation angle of the lever 21 about the axis H with respect to the lever 22, the greater is the extent to which the brake 2 is engaged or disengaged, depending on the direction of the relative rotation. Hence, the relative rotation of the lever 21 direction corresponds to a movement of the piston 9 toward the fully engaged brake position or the fully disengaged brake position, depending on the direction of the relative rotation.

In particular, control unit 26 is configured to control the valve 13 proportionally to the relative rotation of the lever 21. When control unit 26 controls the supplying of the pressurized liquid by means of the valve 13, it also controls the position of the valve 14. Specifically, the valve 14 is set by control unit 26 in the position corresponding to the check valve. When no pressurized liquid is to be supplied, the valve 14 is set by control unit 26 in the position corresponding to the venting valve.

In the embodiment shown, the lever 21 comprises a handle 35 extending along an axis L perpendicular to the axis H. The handle 35 extends between two opposite ends 36, 37.

The lever 21 further comprises a hinged portion 38, which is hinged to the frame 19, in particular directly.

Specifically, the hinged portion 38 is attached to the end 37. More in detail, the hinged portion 38 comprises a wall 39 attached to the end 37 and having a free surface 40 facing the axis H according to the axis L. Preferably, the wall 39 is planar and perpendicular to the axis L. In addition, the hinged portion 38 comprises two lateral walls 41, 42. The lateral walls 41, 42 extend from opposite sides of the wall 39 toward the axis H. In other words, the lateral walls 41, 42 have respective free surfaces 43, 44 facing to each other. Conveniently, both lateral walls 41, 42 are hinged to the frame 19, specifically in a direct manner.

The lever 21 has a portion, specifically defined by the hinged portion 38, which defines a recess, in particular defined by walls 39, 41, 42, more in particular between the surfaces 43, 44. In other words, according to a direction parallel to axis H, the recess is arranged intermediately between two walls, in particular hinged to the frame 19, more in particular in a direct manner.

Preferably, the lever 22 has a portion 45 that is arranged within the recess. In particular, the portion 45 is hinged to the frame 19 about axis H.

When the interlocking device 25 unlocks the levers 21, 22 (unlocked configuration), the latter lever 22 stands in a position, which is specifically a rest position, in which the pressure relief device is not operated to relieve the pressure. Preferably, the lever 22 is maintained in the rest position through an elastic device, e.g. a spring 46, coupling the lever 22 to the frame 19. Precisely, the spring 46 has two ends respectively attached to the lever 22 and the frame 19.

The elastic device opposes to a rotation of the lever 22 according to one direction, specifically anticlockwise or the direction for the activation of the pressure relief device. In particular, the lever 22 abuts against the frame 19 in the rest position, such that a rotation according to the other direction (i.e. clockwise, specifically) is prevented.

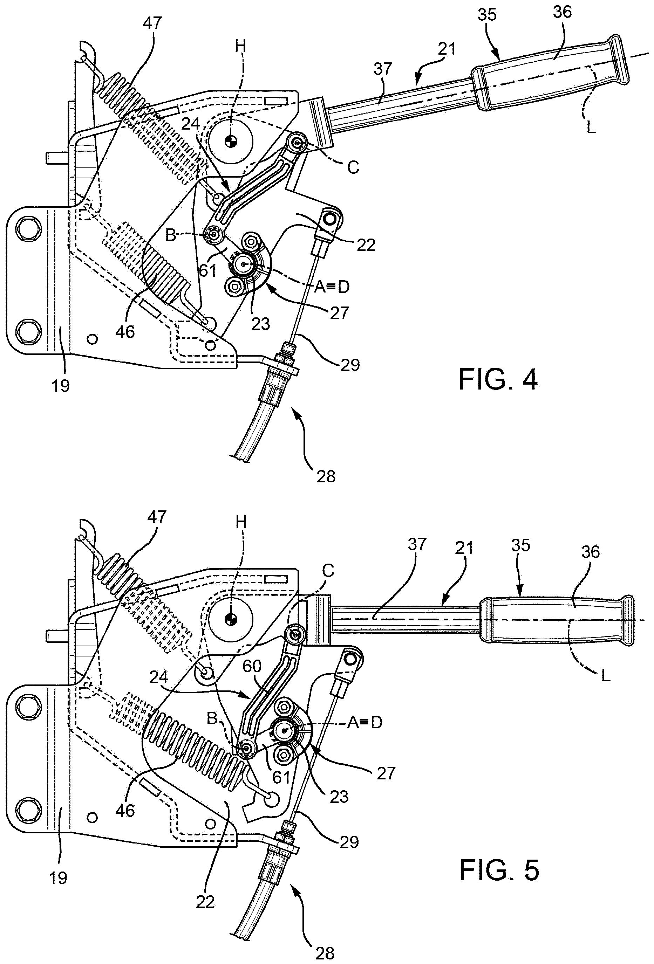

The lever 22 can rotate from the rest position (Figure 3) to a further position (Figure 5), specifically an activation position, in particular against the action of the elastic device, in which the pressure relief device is operated to relieve the pressure, i.e. in particular to engage the brake 2 (more in particular, the piston 9 is in the fully engaged brake position.

The lever 21 can rotate between a first position and a second position, specifically between a rest position (Figure 3), in which the brake 2 is controlled by the control unit 26 to be disengaged (i.e. piston 9 in the fully disengaged position, in particular), and a fully braking position (Figure 4), in which the brake 2 is controlled by the control unit 26 to be fully engaged (i.e. piston 9 in the fully engaged position, in particular). In particular, the rotation of the lever 21 from the rest position to the fully braking position occurs according to an anticlockwise direction.

The above operation of the brake 2 holds specifically when the lever 21 can freely rotate relative to the lever 22 (unlocked configuration), but also in particular when the lever 21 is locked to the lever 22 (locked configuration), precisely because the rotation of the lever 21 from the rest position to an intermediate position before the fully braking position implies or corresponds to an equal rotation of the lever 22 from the rest position to the activation position. Since the activation position of the lever 22 causes the pressure relief, the brake 2 engages anyway.

Otherwise, in the unlocked configuration, the rotation of the lever 21 is independent from that of the lever 22 and transmitted to the element 23 through the transmission 24. In other words, the relative rotation of the lever 21 with respect to the lever 22 coincides with the absolute rotation of the lever 21, while the lever 22 stands in the rest position. In the locked configuration, the transmission 24 entirely rotates integrally with the levers 21, 22, specifically because the element 23 is carried by the lever 22, which integrally rotates with the lever 21 when the latter rotates. Hence, the element 23 is stationary, specifically because the rotation of the lever 21 is not transmitted thereto.

Preferably, the lever 21 is maintained in the rest position through an elastic device, e.g. a spring 47, coupling the lever 21 to the frame 19. Precisely, the spring 47 has two ends respectively attached to the lever 21 and the frame 19.

The elastic device opposes to a rotation of the lever 21 according to one direction, specifically anticlockwise or the direction for the engagement of the brake 2.

As shown in Figure 6, the interlocking device 25 comprises a slot 50 obtained in the lever 22, specifically in the portion 45. In particular, the slot 50 is a groove extending perpendicularly to the axis H. More in particular, the slot 50 is placed within the recess defined by the hinged portion 38. The slot 50 faces the free surface 40.

The interlocking device 25 further comprises an insertion member 51 having a shape or configured to engage the slot 50, thereby interlocking the levers 21, 22. The insertion member 51 is carried by the lever 21 in a movable manner between two positions, at least when the lever 21 is in the rest position. Actually, the insertion member 51 is movable between the two positions for any position of the lever 21.

When the lever 21 is in the rest position (Figures 3, 6, 7), the two positions correspond to an interlocking position (Figure 7), in particular corresponding to the interlocked configuration, in which the insertion member 51 engages the slot 50 to interlock the levers 21, 22, and an unlocked position (Figure 6), in particular corresponding to the unlocked configuration, in which the lever 21 is relatively rotatable with respect to the lever 22.

The insertion member 51 is carried by the lever 21 in a movable manner parallel to the axis L.

Preferably, the handle 35 is tubular. Hence, the handle 35 has a through hole 52 (Figure 7) extending along the axis L, more precisely between ends 36, 37. The insertion member 51 comprises a rod at least partially introduced in the hole 52. The insertion member 51 is carried in a movable manner along the axis L within the hole 52.

In particular, the insertion member 51 is axially guided through the hole 52 (i.e. by walls defining the hole 52) in a sliding manner.

The hole 52 has two opposite ends 53, 54, defining respective openings, of which one faces the slot 50, at least when the lever 21 is in the rest position. In particular, the end 54 communicates with the recess defined by the hinged portion 38.

At least a portion of the insertion member 51, specifically the rod, extends along the axis L and has two opposite ends 55, 56 (Figure 6) . Preferably, the end 55 axially protrudes with respect to the handle 35, at least in the interlocking position, where it engages the slot 50. Actually, as shown in Figure 6, the end 55 protrudes also in the unlocked position, with respect to the handle 35. Therefore, in particular, the end 55 is arranged within the recess defined by the hinged portion 38.

The end 53 of the hole 52 has a greater radial extent than the end 54, namely the end 53 is larger than the end 54. Therefore, a surface 57 is defined within the hole 52; the surface 57 is transversal, more precisely orthogonal to the axis L and arranged in an intermediate axial position between the ends 53, 54.

The end 56 of the insertion member 51 is placed at least partially within the end 53 of the hole. Moreover, the end 56 has a greater radial extent than the end 55, namely the end 56 is larger than the end 55.

The end 56 is axially guided through the end 53 (i.e. by walls defining the end 53) in a sliding manner.

Preferably, the insertion member 51 is maintained in the unlocked position by means of an elastic device, e.g. a spring 58, arranged to oppose to the movement of the insertion member 51 toward the locked position. In particular, the elastic device acts on the end 56 of the insertion member 51.

Specifically, the elastic device is arranged between the surface 57 and the end 56. Precisely, the elastic device has two ends respectively in contact with the surface 57 and the end 56.

The elastic device biases the end 56 away from the surface 57, in particular at least for a distance along the axis L that is equal or greater than the minimum distance along the axis L between the end 55 and the slot 50.

The insertion member 51 can be thrusted toward the interlocked position manually by the driver, for example with the aid of an appropriate instrument, such as a screwdriver.

In the embodiment shown, the transmission 24 is a bar mechanism. As shown in Figure 4, the transmission 24 comprises two levers 60, 61 hinged to one another about an axis B, parallel to axis H, and respectively hinged to the lever 21 and the element 23 about respective axes C, D, parallel to axis H. In particular, axis D coincides with axis A.

More precisely, the lever 60 has two ends respectively hinged to the levers 21, 61. The lever 61 has two ends respectively hinged to the lever 60 and the element 23.

The operation of the described actuating assembly is the following.

During normal operation, i.e. when electric power is available, the driver can selectively engage the brake 2 with the interlocking device 25 in the unlocked configuration by rotating the lever 21 from the rest position (Figure 3) toward the fully braking position (Figure 4). The transmission 24 transmits the rotation of the lever 21 to the element 23, whose movement is detected by the transducer 27. The transducer 27 generates the signal, from which the control unit 26 extracts information regarding the amount of rotation, which coincides with a relative rotation of the lever 21 with respect to the lever 22. The control unit 26 controls the opening of the valve 13 proportionally to the amount of rotation. In this manner, the pump 12 supplies the cylinder 17 while the control unit 26 controls the valve 14 to operate as a check valve. The pressure of the liquid supplied to the cylinder 17 moves the piston 9 proportionally to engage the brake 2.

If the electric power becomes suddenly not available, the control unit 26 stops its operation. If the pressure in the cylinder 17 is high and the driver wants to engage the brake 2, the driver can operate the interlocking device 25 to interlock the levers 21, 22. In particular, the driver pushes the insertion element 51 from its unlocked position until the latter reaches the interlocking position. Now, the driver rotates the lever 21 to reach the fully braking position, while levers 21, 22 are interlocked. The lever 22 rotates integrally with the lever 21 and reaches the actuating position, in which the pressure relief device is operated. The pressurized liquid in the cylinder 17 is vented and the break 2 becomes fully engaged.

In view of the foregoing, the advantages of the actuating assembly according to the invention are apparent.

In particular, the proportional control of the brake 2 and the pressure relief can be carried out through the operation of a single control, i.e. the lever 21, which carries the interlocking device 25.

The arrangement of the levers 21, 22 is extremely simple and compact. Furthermore, the coordination of the components of the mechanism 20 is optimal.

It is clear that modifications can be made to the described actuating assembly without extending beyond the scope of protection defined by the claims.

For example, the insertion element 51 and the hole 52 may be internally and externally screwed to form a screwed coupling; this renders the elastic device unnecessary.

The transmission 24 may be different; for example, the element 23 may have a linear motion, instead of a rotational motion.

Moreover, the lever 22 may be used to operate the pump device 16, instead of the pressure relief device.

The relative placement of the levers 21, 22 may be different from that illustrated. Furthermore, the slot 50 may be obtained on the lever 21, as well as the insertion member 51 may be coupled to the lever 22.

## Claims

1. An actuating assembly for a hydraulic brake (2), the assembly comprising:
- a frame (19),
- a second lever (22) hinged to the frame (19) about a hinge axis (H),
- a movable member (23) carried by the second lever (22) in a movable manner with respect to the second lever (22),
- a control unit (26)
- actuating means (29, 7) coupled to the second lever (22) for operating the hydraulic brake (2) in response to a rotation of the second lever about said hinge axis (H);
said actuating assembly is **characterized in that** it further comprises: a first lever (21) hinged to the frame (19) about the hinge axis (H),
- transmission means (24) for coupling the first lever (21) to the movable member (23) in a manner that a relative rotation of the first lever (21) with respect to the second lever (22) corresponds to a movement of the movable member (23) with respect to the second lever (22),
- a transducer (27) associated to the movable member (23) and configured to detect the movement of the movable member (23) transmitted by the transmission means (24), and to generate an associated signal indicative of the relative rotation corresponding to the movement of the movable member, wherein the control unit is configured to extract from the signal an item of information related to the relative rotation of the first lever (21) and to control the hydraulic brake (2) as a function of the extracted item of information,- interlocking means (25) for selectively locking the first lever (21) to the second lever (22), such that the second lever (22) is constrained to rotate integrally with the first lever (21).

2. The assembly of claim 1, wherein the actuating means (29, 7) comprise
- a hydraulic actuator (7) configured to be supplied with a pressurized liquid and to actuate the hydraulic brake (2) by means of the pressurized liquid, and
- a pressure relief device configured to relieve the pressure of the pressurized liquid supplied to the hydraulic actuator (7) in response to the rotation of the second lever (22).

3. The assembly of claim 1 or 2, wherein the interlocking means (25) comprise
- a slot (50) obtained in one of the first and the second lever (21, 22),
- an insertion member (51) carried by the other one of the first and the second lever (21, 22) in a movable manner,
wherein the first lever (21) is displaceable into a first position in which the insertion member (51) is movable between an interlocking position, in which the insertion member (51) engages the slot (50) to interlock the first and the second lever (21, 22), and an unlocked position, in which the first lever (21) is relatively rotatable with respect to the second lever (22).

4. The assembly of claim 3, wherein the first lever (21) comprises a handle (35) extending along an axis (L) perpendicular to the hinge axis (H); the insertion member (51) being carried by the first lever (21) in a movable manner parallel to said axis (L).

5. The assembly of claim 4, wherein the handle (25) has a through hole (52) along said axis (L), the through hole (52) having a first hole end (54) facing the slot (50) when the first lever (21) is in the first position; the insertion element (51) comprising a rod guided through the through hole (52) in a sliding manner along said axis (L).

6. The assembly of claim 5, wherein the rod has a first rod end (55), which axially protrudes with respect to the handle (35) through the first hole end (55) and engages the slot (50), at least when the first lever (21) is in the first position and the insertion member (51) is in the interlocking position.

7. The assembly of claim 5 or 6, wherein the through hole (52) has a second hole end (53) opposite to the first hole end (54) and having a greater radial extension than the first hole end (53), such that the handle (35) defines a surface (57) transversal to said axis (L) and arranged in an intermediate axial position between the first and second hole end (53, 54); the rod having a second rod end (56) at least partially arranged within the second hole end (53) and guided along said axis (L) through the second hole end (53); the assembly further comprising an elastic device arranged between the second rod end (56) and the surface (57) to oppose to a movement of the insertion member (51) toward the interlocking position.

8. The assembly of any of the foregoing claims, wherein the first lever (21) has a first portion (38) defining a recess intermediately between two walls (41, 42) according to a direction parallel to the hinge axis (H); the second lever (22) having a second portion (45) arranged within said recess.

9. The assembly of any of the foregoing claims, wherein the movable member (23) is carried by the second lever (22) in a rotatable manner about a transducer axis (A) parallel to the hinge axis (H).

10. The assembly of claim 9, wherein the transmission means (24) comprise a third and a fourth lever (60, 61) hinged to one another about a moving axis (B) parallel to the hinge axis (H) and respectively hinged to the first lever (21) about a lever axis (C) and to the movable member (23) about the transducer axis (A).

11. An apparatus for a vehicle, the apparatus comprising a hydraulic brake (2) and an assembly according to any of the foregoing claims for actuating the hydraulic brake (2).

12. A brake arrangement comprising the apparatus of claim 11, wherein the brake arrangement is spring applied hydraulically released.

## Patentansprüche

1. Betätigungsanordnung für eine hydraulische Bremse (2), wobei die Anordnung umfasst:
- einen Rahmen (19),
- einen zweiten Hebel (22), der um eine Schwenkachse (H) schwenkbar an dem Rahmen (19) angebracht ist,
- ein bewegbares Element (23), das bezüglich des zweiten Hebels (22) bewegbar von dem zweiten Hebel (22) getragen wird,
- eine Steuereinheit (26),
- Betätigungsmittel (29, 7), die zur Betätigung der hydraulischen Bremse (2) in Reaktion auf eine Rotation des zweiten Hebels um die Schwenkachse (H) mit dem zweiten Hebel (22) verbunden sind;
wobei die Betätigungsanordnung **dadurch gekennzeichnet ist, dass** sie des Weiteren umfasst: einen ersten Hebel (21), der um die Schwenkachse (H) schwenkbar an dem Rahmen (19) angebracht ist,
- Übertragungsmittel (24) zum Verbinden des ersten Hebels (21) mit dem bewegbaren Element (23) derart, dass eine relative Rotation des ersten Hebels (21) bezüglich des zweiten Hebels (22) einer Bewegung des bewegbaren Elements (23) bezüglich des zweiten Hebels (22) entspricht,
- einen Wandler (27), der dem bewegbaren Element (23) zugeordnet ist und der dazu eingerichtet ist, die Bewegung des bewegbaren Elements (23), die von den Übertragungsmitteln (24) übertragen wird, zu erfassen und ein zugehöriges Signal, das kennzeichnend für eine relative Rotation entsprechend der Bewegung des bewegbaren Elements ist, zu erzeugen, wobei die Steuereinheit dazu eingerichtet ist, einen Informationsteil aus dem Signal extrahieren, der zugehörig zu der relativen Rotation des ersten Hebels (21) ist, und die hydraulische Bremse (2) in Abhängigkeit des extrahierten Informationsteils zu steuern,
- Sperrmittel (25) zur selektiven Sichern des ersten Hebels (21) an den zweiten Hebel (22), sodass der zweite Hebel (22) dazu gezwungen ist, integral mit dem ersten Hebel (21) zu rotieren.

2. Anordnung nach Anspruch 1, wobei die Betätigungsmittel (29, 7) umfassen:
- eine hydraulische Betätigungseinrichtung (7), die dazu eingerichtet ist, mit einer unter Druck stehenden Flüssigkeit versorgt zu werden und die hydraulische Bremse (2) mittels der unter Druck stehenden Flüssigkeit zu betätigen, und
- eine Druckminderungsvorrichtung, die dazu eingerichtet ist, den Druck der unter Druck stehenden Flüssigkeit, die der hydraulische Betätigungseinrichtung (7) bereitgestellt wird, in Reaktion auf die Rotation des zweiten Hebels (22) zu mindern.

3. Anordnung nach Anspruch 1 oder 2, wobei die Sperrmittel (25) umfassen:
- einen Schlitz (50), der in dem ersten oder dem zweiten Hebel (21, 22) vorgesehen ist,
- ein Einsetzelement (51), das von dem anderen aus dem ersten und dem zweiten Hebel (21, 22) bewegbar getragen wird,
wobei der erste Hebel (21) in eine erste Position verstellbar ist, in der das Einsetzelement (51) zwischen einer Sperrposition, in der das Einsetzelement (51) in den Schlitz (50) eingreift, um den ersten an dem zweiten Hebel (21, 22) zu sichern, und einer Entsperrposition, in der der erste Hebel (21) relativ zu dem zweiten Hebel (22) rotierbar ist, bewegbar ist.

4. Anordnung nach Anspruch 3, wobei der erste Hebel (21) einen Griff (35) aufweist, der sich entlang einer Achse (L) erstreckt, die senkrecht zu der Schwenkachse (H) ist; wobei das Einsetzelement (51) parallel zu der Achse (L) bewegbar von dem ersten Hebel (21) getragen wird.

5. Anordnung nach Anspruch 4, wobei der Griff (35) ein Durchgangsloch (52) entlang der Achse (L) aufweist, wobei das Durchgangsloch (52) ein erstes Lochende (54) aufweist, das in Richtung des Schlitzes (50) gerichtet ist, wenn der erste Hebel (21) sich in der ersten Position befindet, wobei das Einsetzelement (51) eine Stange aufweist, die durch das Durchgangsloch (52) hindurch entlang der Achse (L) gleitend geführt ist.

6. Anordnung nach Anspruch 5, wobei die Stange ein erstes Stangenende (55) aufweist, das durch das erste Lochende (54) bezüglich des Griffs (35) hervorsteht und in den Schlitz (50) eingreift, zumindest wenn der erste Hebel (21) sich in der ersten Position befindet und das Einsetzelement (51) sich in der Sperrposition befindet.

7. Anordnung nach Anspruch 5 oder 6, wobei das Durchgangsloch (52) ein zweites Lochende (53) gegenüber dem ersten Lochende (54) aufweist und das eine größere radiale Erstreckung als das erste Lochende (54) aufweist, sodass der Griff (35) eine Fläche (57) definiert, die quer zu der Achse (L) angeordnet ist und die sich in einer axialen Zwischenposition zwischen dem ersten und dem zweiten Lochende (53, 54) befindet;
wobei die Stange ein zweites Stangenende (56) aufweist, das zumindest teilweise innerhalb des zweiten Lochendes (53) angeordnet ist und das entlang der Achse (L) durch das zweite Lochende (53) hindurch geführt ist; wobei die Anordnung des Weiteren ein elastisches Mittel aufweist, das zwischen dem zweiten Lochende (56) und der Fläche (57) angeordnet ist, um einer Bewegung des Einsetzelements (51) in Richtung der Sperrposition entgegenzuwirken.

8. Anordnung nach einem der vorhergehenden Ansprüche, wobei der erste Hebel (21) einen ersten Abschnitt (38) aufweist, der zwischen zwei Wänden (41, 42) in einer Richtung parallel zu der Schwenkachse (H) eine Ausnehmung definiert; wobei der zweite Hebel (22) einen zweiten Abschnitt (45) aufweist, der innerhalb der Ausnehmung angeordnet ist.

9. Anordnung nach einem der vorhergehenden Ansprüche, wobei das bewegbare Element (23) von dem zweiten Hebel (22) in einer rotierbaren Weise um eine Wandlerachse (A), die parallel zu der Schwenkachse (H) ist, getragen wird.

10. Anordnung nach Anspruch 9, wobei die Übertragungsmittel (24) einen dritten und einen vierten Hebel (60, 61) aufweisen, die um eine bewegliche Achse (B), die parallel zu der Schwenkachse (H) ist, aneinander schwenkbar befestigt sind und die jeweils an dem ersten Hebel (21) um eine Hebelachse (C) und an dem bewegbaren Element (23) um die Wandlerachse (A) schwenkbar befestigt sind.

11. Vorrichtung für ein Fahrzeug, wobei die Vorrichtung eine hydraulische Bremse (2) und eine Anordnung nach einem der vorhergehenden Ansprüche zur Betätigung der hydraulischen Bremse (2) umfasst.

12. Bremsanordnung, die eine Vorrichtung nach Anspruch 11 umfasst, wobei die Bremsanordnung eine federbetätigte, hydraulisch lösbare Bremse ist.

## Revendications

1. Un dispositif d'actionnement pour un frein hydraulique (2), le dispositif comprenant :
- un châssis (19),
- un deuxième levier (22) relié de manière articulée au niveau du châssis (19) autour d'un axe charnière (H),
- un élément mobile (23) soutenu par le deuxième levier (22) de manière mobile par rapport au deuxième levier (22),
- une unité de commande (26)
- des moyens d'actionnement (29, 7) couplés au deuxième levier (22) pour actionner le frein hydraulique (2) en réponse à une rotation du deuxième levier autour dudit axe charnière (H) ;
- ledit dispositif d'actionnement est **caractérisé en ce qu'**il comprend en outre : un premier levier (21) relié de manière articulée au niveau du châssis (19) autour de l'axe charnière (H),
- des moyens de transmission (24) pour coupler le premier levier (21) à l'élément mobile (23) de sorte qu'une rotation relative du premier levier (21) par rapport au deuxième levier (22) correspond à un mouvement de l'élément mobile (23) par rapport au deuxième levier (22),
- un transducteur (27) associé à l'élément mobile (23) et configuré pour détecter le mouvement de l'élément mobile (23) transmis par les moyens de transmission (24), et pour générer un signal associé indicatif de la rotation relative correspondant au mouvement de l'élément mobile, dans lequel l'unité de commande est configurée pour extraire du signal une information concernant la rotation relative du premier levier (21) et pour commander le frein hydraulique (2) en fonction de l'information extraite,
- des moyens de verrouillage (25) pour verrouiller de manière sélective le premier levier (21) au deuxième levier (22), de sorte que le deuxième levier (22) est contraint de tourner de manière solidaire avec le premier levier (21).

2. Le dispositif selon la revendication 1, dans lequel les moyens d'actionnement (29, 7) comprennent
- un actionneur hydraulique (7) configuré pour être alimenté par un liquide sous pression et pour actionner le frein hydraulique (2) à l'aide du liquide sous pression, et
- un limiteur de pression configuré pour limiter la pression du liquide sous pression fourni à l'actionneur hydraulique (7) en réponse à la rotation du deuxième levier (22).

3. Le dispositif selon la revendication 1 ou la revendication 2, dans lequel les moyens de verrouillage (25) comprennent
- une fente (50) présente dans l'un parmi le premier et le deuxième levier (21, 22),
- un élément d'insertion (51) soutenu par l'autre parmi le premier et le deuxième levier (21, 22) de manière mobile,
dans lequel le premier levier (21) peut être déplacé dans une première position dans laquelle l'élément d'insertion (51) est mobile entre une position de verrouillage, dans laquelle l'élément d'insertion (51) s'engage dans la fente (50) pour verrouiller le premier et le deuxième levier (21, 22), et une position déverrouillée, dans laquelle le premier levier (21) est relativement rotatif par rapport au deuxième levier (22).

4. Le dispositif selon la revendication 3, dans lequel le premier levier (21) comprend une poignée (35) s'étendant selon un axe (L) perpendiculaire à l'axe charnière (H) ; l'élément d'insertion (51) étant soutenu par le premier levier (21) de manière mobile parallèlement audit axe (L).

5. Le dispositif selon la revendication 4, dans lequel la poignée (35) présente un orifice de passage (52) le long dudit axe (L), l'orifice de passage (52) présentant une première extrémité d'orifice (54) faisant face à la fente (50) lorsque le premier levier (21) est dans la première position; l'élément d'insertion (51) comprenant une tige guidée à travers l'orifice de passage (52) de manière coulissante le long dudit axe (L).

6. Le dispositif selon la revendication 5, dans lequel la tige présente une première extrémité de tige (55), qui fait saillie de manière axiale par rapport à la poignée (35) à travers la première extrémité d'orifice (54) et s'engage dans la fente (50), au moins lorsque le premier levier (21) se trouve dans la première position et l'élément d'insertion (51) se trouve dans la position de verrouillage.

7. Le dispositif selon la revendication 5 ou la revendication 6, dans lequel l'orifice de passage (52) présente une seconde extrémité d'orifice (53) opposée à la première extrémité d'orifice (54) et présentant une extension radiale supérieure à la première extrémité d'orifice (54), de sorte que la poignée (35) définit une surface (57) transversale audit axe (L) et agencée dans une position axiale intermédiaire entre la première et la seconde extrémité d'orifice (53, 54) ;
la tige présentant une seconde extrémité de tige (56) au moins partiellement agencée à l'intérieur de la seconde extrémité d'orifice (53) et guidée le long dudit axe (L) à travers la seconde extrémité d'orifice (53) ; le dispositif comprenant en outre un dispositif élastique agencé entre la seconde extrémité de tige (56) et la surface (57) afin de contrer un mouvement de l'élément d'insertion (51) vers la position de verrouillage.

8. Le dispositif selon l'une quelconque des revendications précédentes, dans lequel le premier levier (21) présente une première partie (38) définissant un renfoncement en position intermédiaire entre deux parois (41, 42) selon une direction parallèle à l'axe charnière (H) ; le deuxième levier (22) présentant une seconde partie (45) agencée à l'intérieur dudit renfoncement.

9. Le dispositif selon l'une quelconque des revendications précédentes, dans lequel l'élément mobile (23) est soutenu par le deuxième levier (22) de manière rotative autour d'un axe de transducteur (A) parallèle à l'axe charnière (H).

10. Le dispositif selon la revendication 9, dans lequel les moyens de transmission (24) comprennent un troisième et un quatrième levier (60, 61) articulés l'un avec l'autre autour d'un axe mobile (B) parallèle à l'axe charnière (H) et respectivement articulés au niveau du premier levier (21) autour d'un axe de levier (C) et au niveau de l'élément mobile (23) autour de l'axe du transducteur (A).

11. Un appareil pour un véhicule, l'appareil comprenant un frein hydraulique (2) et un dispositif selon l'une quelconque des revendications précédentes pour actionner le frein hydraulique (2).

12. Un dispositif de freinage comprenant l'appareil selon la revendication 11, dans lequel le dispositif de freinage est actionné par ressort et desserré hydrauliquement.
